# EUROPEAN PATENT SPECIFICATION

(11) **EP 0 747 120 B1**
(45) Date of publication and mention of the grant of the patent: **01.03.2000**
(21) Application number: 96109028.9
(22) Date of filing: 05.06.1996
(51) Int. Cl.: B01J 20/06, B01J 23/06

(54) **Particulate compositions**
Partikelzusammensetzungen
Compostions particulaires

(30) Priority: 07.06.1995 US 486125
(43) Date of publication of application: 11.12.1996
(73) Proprietor: PHILLIPS PETROLEUM COMPANY, Bartlesville Oklahoma 74004 (US)
(72) Inventor: Khare, Gyanesh P., Bartlesville, OK 74006 (US); Engelbert, Donald R., Copan, OK 74022 (US)
(74) Representative: Dost, Wolfgang, Dr.rer.nat., Dipl.-Chem.

(56) References cited:
- FR-A- 1 604 707
- US-A- 4 263 020
- US-A- 4 888 157
- DATABASE WPI Week 9014 Derwent Publications Ltd., London, GB; AN 90-106705 XP002020209 & SU-A-1 510 914 (IVAN CHEM TECHN INS)

## Description

### BACKGROUND

This invention relates to the field of particulate compositions.

Fluidized bed reactors have advantages over fixed bed reactors such as better heat transfer and better pressure drop. Fluidized bed reactors generally use reactants that are particulates. The size of these particulates is generally in the range of about 1 to about 1000 microns. However, the reactants used generally do not have sufficient thermal stability and sufficient attrition resistance for all applications.

### SUMMARY

It is an object of this invention to provide a process to produce a particulate composition.

It is another object of this invention to provide a process to produce a particulate composition that has improved thermal stability and improved attrition resistance and that can be used in a wide variety of applications.

In accordance with this invention a process is provided to produce a particulate composition that comprises zinc aluminate. This process comprises: (a) contacting a zinc component, an alumina component, a dispersant component, to form a mixture; and then (b) spray drying said mixture to form said particulate composition.

### DETAILED DESCRIPTION OF THE INVENTION

Generally, the zinc component is zinc oxide. However, it may be any zinc compound that combines with alumina to form zinc aluminate under the conditions of preparation described herein. Examples of such compounds include, but are not limited to, zinc sulfide, zinc sulfate, zinc hydroxide, zinc carbonate, zinc acetate, zinc nitrate, zinc chloride, zinc bromide, zinc iodide, zinc oxychloride, and zinc stearate. Mixtures of such compounds can also be used. The amount of the zinc component used is in the range of 5 to 75 weight percent based on the total weight of the components. However, an amount in the range of 15 to 60 weight percent is preferred and an amount in the range of 25 to 45 weight percent is most preferred.

The alumina component can be any suitable alumina or aluminosilicate. The alumina component should combine with the zinc component, under the conditions of preparation herein, to form zinc aluminate. Suitable alumina components include, but are not limited to, hydrated alumina and flame-hydrolyzed alumina. The amount of the alumina component used is in the range of 5 to 90 weight percent based on the total weight of the components. However, an amount in the range of 25 to 75 weight percent is preferred and an amount in the range of 40 to 65 weight percent is most preferred.

The dispersant component can be any suitable compound that helps to promote the spray drying ability of the mixture. In particular, these components are useful in preventing deposition, precipitation, settling, agglomerating, adhering, and caking of solid particles in a fluid medium. Suitable dispersants include, but are not limited to, condensed phosphates and sulfonated polymers. The term condensed phosphates refers to any dehydrated phosphate where the H₂O:P₂O₅ is less than about 3:1. Specific examples of suitable dispersants include, but are not limited to, sodium pyrophosphate, sodium metaphosphate, and sulfonated styrene maleic anhydride polymer. The amount of the component used is in the range of 0.01 to 10 weight percent based on the total weight of the components. However, an amount in the range of 0.1 to 8 weight percent is preferred and an amount in the range of 1 to 3 weight percent is most preferred.

In a preferred embodiment of the invention a binder component is used. The binder component can be any suitable compound that has cement-like properties, or clay-like properties, which can help to bind the particulate composition together. Suitable examples of such binder components include, but are not limited to, cements such as, for example, gypsum plaster, common lime, hydraulic lime, natural cements, portland cements, and high alumina cements, and clays, such as, for example, attapulgite, bentonite, halloysite, hectorite, kaolinite, montmorillonite, pyrophylite, sepiolite, talc, and vermiculite. A particularly preferred binder component is calcium aluminate cement. The amount of binder component used is in the range of 0.1 to 30 weight percent based on the total weight of the components. However, an amount in the range of 1 to 20 weight percent is preferred and an amount in the range of 5 to 15 weight percent is most preferred.

In another preferred embodiment of the invention an acid component is used. The acid component can be any suitable acid that can help form zinc aluminate from the zinc component and the alumina component. In general, the acid component can be an organic acid or a mineral acid. If the acid component is an organic acid it is preferred if it is a carboxylic acid. If the acid component is a mineral acid it is preferred if it is a nitric acid, a phosphoric acid, or a sulfuric acid. Mixtures of these acids can also be used. Generally, the acid is used with water to form a dilute aqueous acid solution. The amount of acid in the acid component is in the range of 0.01 to 20 volume percent based on the total volume of the acid component. However, it is preferred if the amount is in the range of 0.1 to 10 volume percent and it is most preferred if the amount is in the range of 1 to 5 volume percent. In general, the amount of acid component to use is based on the amount the dry components. That is, the ratio of all the dry components (in grams) to the acid component (in milliliters) should be less than about 1.75:1. However, it is preferred if this ratio is less than about 1.25:1 and it is more preferred if it is less than about 0.75:1. These ratios will help to form a mixture that is a liquid solution, a slurry, or a paste that is capable of being dispersed in a fluid like spray.

The zinc component, alumina component, and dispersant component can be contacted together in any manner known in the art that will form a mixture that is a liquid solution, a slurry, or a paste that is capable of being dispersed in a fluid like spray. When the zinc component, alumina component, and dispersant component are solids then they should be contacted in a liquid medium to form a mixture that is a liquid solution, a slurry, or a paste that is capable of being dispersed in a fluid like spray. In another embodiment of the invention, the zinc component and the alumina component can be contacted together to form a composition comprising zinc aluminate and then this zinc aluminate composition is contacted with a dispersant. Suitable means for contacting these components are known in the art such as, for example, tumblers, stationary shells, troughs, muller mixers or impact mixers. If desired, a binder component can be contacted with the other components to form, among other things, a composition that has improved attrition resistance. Generally, these components, after contacting to form a mixture, are contacted with the acid component. However, the dry components and the acid components can be contacted together simultaneously or separately. The ratio of all the dry components (in grams) to the components that are liquids (in milliliters) should be less than about 1.75:1. However, it is preferred if this ratio is less than about 1.25:1 and it is more preferred if it is less than about 0.75:1. These ratios will help to form a mixture that is a liquid solution, a slurry, or a paste that is capable of being dispersed in a fluid like spray.

After the components are contacted together to form a mixture, they are subjected to spray drying to form particles having a size from 1 to 1000 microns. Spray drying is known in and art and is discussed in *PERRY'S CHEMICAL ENGINEERS' HANDBOOK, sixth edition*, published by McGraw-Hill, Inc. at pages 20-54 through 20-58. Additional information can be obtained, especially from the bibliography, from the *HANDBOOK OF INDUSTRIAL DRYING*, published by Marcel Dekker. Inc. pages 243 through 293. The particulate compositions formed can have a size from 10 to 1000 microns. However, it is preferred if the size of the particles is from 30 to 300 and it is most preferred if the size is from 50 to 100 microns.

The dried, particulate composition can then be calcined to form a calcined, particulate composition. The calcination can be conducted under any suitable conditions that remove residual water, oxidize any combustibles, and effect the combination of the zinc component and the alumina component to form zinc aluminate. Usually, the dried composition is then calcined in an oxygen containing ambient. Generally, the temperature that the calcination takes place at is in the range of 300 to 1200°C. However, it is more preferred if the temperature is in the range of 450 to 1000°C. The calcination should be conducted for a period of time in the range of 0.5 to 12 hours.

If desired, a metal oxide component can be added to the composition. These metal oxide components can improve the physical and chemical properties of the particulate composition. For example, these metal oxide components can increase the ability of the particulate composition to hydrogenate various compounds. Examples of suitable metal oxide components include, but are not limited to, iron oxide, cobalt oxide, nickel oxide, ruthenium oxide, rhodium oxide, palladium oxide, osmium oxide, iridium oxide, platinum oxide, copper oxide, chromium oxide, titanium oxide, zirconium oxide, tin oxide, and manganese oxide. The amount of metal oxide component in the particulate composition is in the range of 0.01 to 20 weight percent based on the weight of the particulate composition. However, it is more preferable if the amount is in the range of 0.1 to 15 weight percent, and most preferably the amount is in the range of 1 to 10 weight percent.

The metal oxide component can be added to the particulate composition in the form of the elemental metal, metal oxide, and/or metal-containing compounds that are convertible to metal oxides under the calcining conditions described herein. Some examples of such metal-containing compounds include metal acetates, metal carbonates, metal nitrates, metal sulfates, metal thiocyanates and mixtures of any two or more thereof.

The elemental metal, metal oxide, and/or metal-containing compounds can be added to the particulate composition by any method known in the art. One such method is the impregnation of the particulate composition with a liquid medium, either aqueous or organic, that contains the elemental metal, metal oxide, and/or metal-containing compounds. After the elemental metal, metal oxide, and/or metal-containing compounds have been added to the particulate composition, the composition is dried and calcined.

The elemental metal, metal oxide, and/or metal-containing compounds can be added to the particulate composition as components of the original mixture, or they can be added after the particulate composition has been spray dried and calcined. If the metal oxide is added to the particulate composition after it has been spray dried and calcined, then this composition is dried and calcined a second time. This composition is preferably dried at a temperature in the range of 50°C to 300°C, but more preferably, the drying temperature will range from 100°C to 250°C, for a period of time generally in the range of 0.5 hour to 8 hours, more preferably in the range of 1 hours to 5 hours. This dried composition is then calcined in the presence of oxygen, or an oxygen-containing gas, at a temperature in the range of 300°C to 800°C, and more preferably in the range of 450°C to 750°C, until volatile matter is removed and until at least a portion of the elemental metal and/or the metal-containing compounds is converted to a metal oxide. The time required for this calcining step will generally be in the range of 0.5 hour to 4 hours, and will preferably be in the range of 1 hour to 3 hours.

The particulate compositions of this invention can be used in a wide variety of applications. For example they can be used as components of zinc oxide sorbents for use in sulfur removal processes where there is achieved a contacting of the zinc oxide particulate composition with a sulfur-containing gaseous feed stream, and thereafter, of the zinc oxide particulate composition with oxygen or an oxygen-containing gas which is utilized to regenerate the zinc oxide particulate composition. Examples of such sulfur removal processes are disclosed in U.S. patents 4,990,318; 5,077,261; 5,102,854; 5,108,975; 5,130,288; 5,174,919; 5,177,050; 5,219,542; 5,244,641; 5,248,481; and 5,281,445.

Additionally, these particulate compositions can be used as components of catalysts that are used: (1) in dehydrogenation of alkanes; (2) to make olefins and diolefins; (3) in hydrogenation of alkenes and alkynes in hydrocarbon streams; (4) in dehydrocyclization of paraffins into aromatics. They can be used as components of compounds used for waste water treatment and they can be used as components of compounds used for waste gas purifications such as, for example, the removal of NOₓ, H₂S, and hydrides from refinery and chemical processes.

### EXAMPLES

These examples are provided to illustrate the invention and are not meant to be construed as limiting the invention.

### Example One

This Example demonstrates the inventive preparation of zinc aluminate particles. It also demonstrates the preparation of mixtures that can be spray dried to produce these zinc aluminate particles.

### Part A:

One hundred twenty grams of zinc oxide, 188 grams of Vista Dispal alumina, 30 grams of Secar 71 calcium aluminate cement, 3.42 grams of sodium pyrophosphate, and 4.0 grams of tin oxide, were dry mixed. This dry mixture was slowly added with stirring to 500 milliliters of 2.0 volume percent aqueous acetic acid. The resulting slurry mixture was further mixed for 20 minutes and then filtered through a 60-mesh screen. This filtered slurry mixture was spray dried using a Yamato Model DL-41 spray drier at the following settings:

| | |
|---|---|
| Inlet Temperature | 220° C |
| Outlet Temperature | 120° C |
| Temperature Set Point | 300° C |
| Feed Pump | 2.5 |
| Atomizing Air | 0.6 |
| Aspirator Air | 0.8 (rotameter) |
| Needle Knocker | 1.0 |
| Nozzle | SU-2A |

The resulting spray dried microspheres were calcined at 843° C for 5 hours, ramping from ambient at about 3° C per minute. The calcined material exhibited the following properties:

| Particle Size Distribution | |
|---|---|
| Mesh | Weight % |
| +120 | 0.1 |
| +270 | 53.2 |
| +325 | 13.1 |
| +400 | 18.6 |
| -400 | 15.1 |

Bulk Density (packed)1.0 g/cc (determined on the +270 and +325 mesh fractions from the combined and resieved products of several runs similar to that described).

Both the calcined material from above and a control material (Davison GXP-5, a commercial fluid cracking catalyst used in petroleum crackers) were tested for attrition resistance (percent attrition) using a procedure similar to that described in U.S. 4,010,116. The sample of the present inventive material used was obtained from a +270 mesh fraction of the combined and resieved products of several runs similar to the one described. This +270 mesh fraction was resieved on -80 and +230 mesh and 50 grams of the resulting material was used in the attrition test. The length of the attrition test was 5 hours. Percent attrition represents the amount of the material lost as fines, due to attrition, at the end of 5-hour tests.

| Percent Attrition | |
|---|---|
| Present Inventive Material | 7.66 |
| Control Catalyst | 4.59 |

### Part B:

In a separate inventive preparation, one hundred twenty grams of zinc oxide, 188 grams of Vista Dispal alumina, 30 grams of Secar 71 calcium aluminate cement, 3.42 grams of sodium metaphosphate and 4.0 grams of tin oxide were dry mixed. This dry mixture was slowly added with stirring to 500 ml of 2.0 volume percent aqueous acetic acid. The resulting slurry mixture was further mixed for 30 minutes and then filtered through a 60-mesh screen. The filtered slurry mixture was slightly gelled, but would pour and pump easily. The filtered slurry was spray dried using the same equipment and conditions as indicated above, except that the nozzle was an SU-2 instead of an SU-2A. The spray dried material was calcined at 835° C for 5 hours, ramping from ambient at about 3° C per minute. A sieve analysis of the calcined material showed the following particle size distribution:

| Mesh | Weight % |
|---|---|
| +120 | 2.1 |
| +270 | 33.1 |
| +325 | 24.1 |
| +400 | 18.0 |
| -400 | 22.7 |

### Part C:

One hundred twenty grams of zinc oxide, 188 grams of Vista Dispal alumina, 30 grams of Secar 71 calcium aluminate cement, 3.42 grams of a sulfonated styrene maleic anhydride polymer, and 4.0 grams of tin oxide were dry mixed. The dry mixture was slowly added with stirring to 500 ml of 2.0 volume percent aqueous acetic acid. The resulting slurry mixture was further mixed for 30 minutes. At this point the slurry still had very low viscosity with no apparent gelling. The slurry was filtered through a 60-mesh screen and spray dried using the same equipment and conditions indicated above. The spray dried material was calcined at 835°C for 5 hours, ramping from ambient at about 3°C per minute. A sieve analysis of the calcined material showed the following particle size distribution.

| Mesh | Weight % |
|---|---|
| +120 | 16.2 |
| +270 | 27.4 |
| +325 | 8.8 |
| +400 | 13.7 |
| -400 | 33.9 |

### Comparative Example One

This Example demonstrates the critical nature of the dispersant component in this invention. Described are five unsuccessful attempts to prepare mixtures suitable for spray drying in which the sodium pyrophosphate of Example One, Part A, has been replaced with another material.

### Part A:

One hundred twenty grams of zinc oxide, 188 grams of Vista Dispal alumina, 30 grams of Secar 71 calcium aluminate cement, and 4.0 grams of tin oxide were dry mixed. The dry mixture was slowly added with stirring to 500 ml of 2.0 volume percent aqueous acetic acid. To this was added 3.42 grams of sodium silicate. Stirring was continued for 5 minutes, at which time the mixture had gelled to the point it was too thick to be pumped for spray drying.

### Part B:

One hundred twenty grams of zinc oxide, 188 grams of Vista Dispal alumina, 30 grams of Secar 71 calcium aluminate cement, 3.42 grams of poly(acrylic acid) (molecular weight 200,000-450,000) and 4.0 grams of tin oxide were dry mixed. The dry mixture was slowly added with stirring to 500 ml of 2.0 volume percent aqueous acetic acid. During the addition, the mixture started to gel. When all of the powdered mixture had been added to the acetic acid (about 5 minutes), the mixture was too thick to be pumped for spray drying.

### Part C:

One hundred twenty grams of zinc oxide, 188 grams of Vista Dispal alumina, 30 grams of Secar 71 calcium aluminate cement, 3.42 grams of poly(acrylic acid) (molecular weight 200,000-450,000) and 4.0 grams of tin oxide were dry mixed. The mixture was slowly added with stirring to 500 grams of distilled water. The mixture gelled to the point it was too thick to be pumped for spray drying.

### Part D:

One hundred twenty grams of zinc oxide, 188 grams of Vista Dispal alumina, 30 grams of Secar 71 calcium aluminate cement, and 4.0 grams of tin oxide were dry mixed. Separately, 3.42 grams of a 65 weight percent aqueous solution of poly(acrylic acid) (molecular weight 2000) was mixed with 500 grams of distilled water. The solution tested weakly acidic with pH paper. With stirring, the dry mixture was slowly added to the weakly acidic solution. Before the addition of the dry mixture was complete, the liquid had gelled and become too thick to be pumped for spray drying.

### Part E:

One hundred twenty grams of zinc oxide, 188 grams of Vista Dispal alumina, 30 grams of Secar 71 calcium aluminate cement, and 4.0 grams of tin oxide were dry mixed. Separately, 3.42 grams of a 65 weight percent aqueous solution of poly(acrylic acid) (molecular weight 2000) was mixed with 500 grams of distilled water and 0.50 grams of sodium hydroxide. The solution tested weakly basic with pH paper. With stirring, the dry mixture was slowly added to the weakly basic solution. Before the addition of the dry mixture was complete, the liquid had gelled and become too thick to be pumped for spray drying.

### Comparative Example Two:

This Example demonstrates the critical nature of the dispersant component in this invention. This run shows that without the dispersant component a mixture is formed that is not capable of being dispersed in a fluid like spray.

Sixty grams of zinc oxide, 94 grams of Vista Dispal alumina, 15 grams of Secar 71 calcium aluminate cement, and 2.0 grams of tin oxide were dry mixed. The dry mixture was slowly added with stirring to 500 ml of 1.0 volume percent aqueous acetic acid. While stirring, the mixture gelled to the point that it was thick enough to be spooned. Spray drying was attempted but it clogged the nozzle almost immediately.

### Example Two:

This Example demonstrates the use of the zinc aluminate particles in forming a zinc oxide sorbent.

Fifty grams of the zinc aluminate particles prepared in Example One, Part A, were spray impregnated with a solution of 46 grams of zinc nitrate hexahydrate dissolved in 7 grams of warm deionized water. The impregnated granules were first surface dried using a heat gun, then calcined at 450° C for one hour. The sorbent of this Example was further prepared by carrying out one more impregnation/drying/calcination step as described above.

Next, thirty-seven grams of the impregnated material from above was spray impregnated with a solution of 10.69 grams of nickel nitrate hexahydrate dissolved in 7.86 grams of deionized water. This material was then dried and calcined at 635° C for one hour, ramping from ambient at 5° C per minute.

The nickel-impregnated material from above was tested for sulfur loading. The test was carried out in a unit comprising a 20 mm O.D. quartz reactor and a 2 mm thermocouple well. The reactor was operated in a fixed bed up flow mode using 10 grams of the tested sorbent. The sorbent was heated to 538° C in a stream of nitrogen. When the desired temperature was obtained, the nitrogen stream was replaced with a stream of simulated sulfur plant feed gas comprising 4.2 volume percent hydrogen sulfide, 40.0 volume percent carbon dioxide and 55.8 volume percent nitrogen. The gas hourly space velocity was 1450 cc/cc sorbent/hour. Sulfur loading was monitored by measuring the concentration of hydrogen sulfide in the reactor effluent, using a General Monitors hydrogen sulfide monitor suited to the concentration ranges encountered. Once the sorbent was fully loaded, as evidenced by hydrogen sulfide breakthrough, the flow of the simulated sulfur plant gas to the reactor was halted and the reactor was purged with nitrogen for 45 minutes while it was heated to a regeneration temperature of 593° C. The loaded sorbent was regenerated in a stream of air at 200 cc/minute for about 5 hours. Then the reactor was purged with nitrogen for about 40 minutes as it was cooled to 538° C. Then, the nitrogen flow was halted and the flow of simulated sulfur plant feed gas was resumed to begin another absorption cycle. The process was repeated for the desired number of cycles. The results of the test are shown below in Table I.

**Table I -**

| Results of Sulfur Absorbency Test | | |
|---|---|---|
| **Temperature, °C** | **Cycle** | **Sulfur Loading, %******* |
| **538** | **1** | **3.9** |
| **538** | **2** | **6.9** |
| **538** | **3** | **8.0** |
| **538** | **4** | **8.4** |

| | | |
|---|---|---|
| *The weight percent sulfur in absorbent at hydrogen sulfide breakthrough. | | |

The results shown in Table I show the sorbent made with the zinc aluminate particles of this invention to be highly effective in sulfur removal from gases.

## Claims

1. A process comprising
(a) contacting
(1) a zinc component,
(2) an alumina component, and
(3) a dispersant component,
to form a mixture; and then
(b) spray drying said mixture to form particles.

2. The process of claim 1, comprising in step
(a) contacting
(1) the zinc component,
(2) the alumina component, and
(3) the dispersant component, further with a a binder component and/or an acid component
to form the mixture.

3. The process of claim 1 or 2, wherein said zinc component is selected from zinc sulfide, zinc sulfate, zinc hydroxide, zinc carbonate, zinc acetate, zinc nitrate, zinc chloride, zinc bromide, zinc iodide, zinc oxychloride, zinc stearate and mixtures thereof.

4. The process of any of claims 1 to 3, wherein the amount of the zinc component used is in the range of 15 to 60 weight percent based on the total weight of the components.

5. The process of any of the preceding claims, wherein said alumina component comprises alumina.

6. The process of any of the preceding claims, wherein the amount of the alumina component used is in the range of 30 to 75 weight percent based on the total weight of the components.

7. The process of any of the preceding claims, wherein said dispersant component is selected from condensed phosphates, sulfonated polymers and mixtures thereof.

8. The process of any of the preceding claims, wherein the amount of the dispersant component used is in the range of 0.1 to 8 weight percent based on the total weight of the components.

9. The process of any of claims 2 to 8, wherein said binder component is selected from gypsum plaster, common lime, hydraulic lime, natural cements, portland cements, high alumina cements, attapulgite, bentonite, halloysite, hectorite, kaolinite, montmorrillonite, pyrophylite, sepiolite, talc, vermiculite, and mixtures thereof.

10. The process of any of claims 2 to 9, wherein the amount of the binder component used is in the range of 1 to 20 weight percent based on the total weight of the components.

11. The process of any of claims 2 to 10, wherein said acid component is selected from carboxylic acids, nitric acids, phosphoric acids, sulfuric acids, and mixtures thereof.

12. The process of any of claims 2 to 11, wherein the amount of acid in the acid component is in the range of 0.1 to 10 volume percent based on the total volume of the acid component.

## Patentansprüche

1. Verfahren, umfassend:
(a) Zusammenbringen
(1) einer Zink-Komponente
(2) einer Aluminiumoxid-Komponente, und
(3) einer Dispergiermittel-Komponente
unter Bildung eines Gemisches; und anschließend
(b) Sprühtrocknen des Gemisches unter Bildung von Teilchen.

2. Verfahren nach Anspruch 1, umfassend in der Stufe
(a) Zusammenbringen
(1) der Zink- Komponente
(2) der Aluminiumoxid- Komponente, und
(3) der Dispergiermittel-Komponente, das
Zusammenbringen mit einer Bindemittel-Komponente und/oder einer Säure-Komponente
unter Bildung des Gemisches.

3. Verfahren nach Anspruch 1 oder 2, wobei die Zink-Komponente ausgewählt ist aus Zinksulfid, Zinksulfat, Zinkhydroxid, Zinkcarbonat, Zinkacetat, Zinknitrat, Zinkchlorid, Zinkbromid, Zinkiodid, Zinkoxychlorid, Zinkstearat und aus Gemischen hiervon.

4. Verfahren nach einem der Ansprüche 1 bis 3, wobei die Menge der verwendeten Zink-Komponente, bezogen auf das Gesamtgewicht der Komponenten, 15 bis 60 Gew.-% beträgt.

5. Verfahren nach einem der vorhergehenden Ansprüche, wobei die Aluminiumoxid-Komponente Aluminiumoxid enthält.

6. Verfahren nach einem der vorhergehenden Ansprüche, wobei die Menge der verwendeten Aluminiumoxid-Komponente, bezogen auf das Gesamtgewicht der Komponenten, 30 bis 75 Gew.-% beträgt.

7. Verfahren nach einem der vorhergehenden Ansprüche, wobei die Dispergiermittel-Komponente ausgewählt ist aus kondensierten Phosphaten, sulfonierten Polymeren und aus Gemischen hiervon.

8. Verfahren nach einem der vorhergehenden Ansprüche, wobei die Menge der verwendeten Dispergiermittel-Komponente, bezogen auf das Gesamtgewicht der Komponenten, 0,1 bis 8 Gew.-% beträgt.

9. Verfahren nach einem der Ansprüche 2 bis 8, wobei die Bindemittel-Komponente ausgewählt ist aus Baugips, gewöhnlichem Kalk, Wasserkalk, natürlichen Zementen, Portland-Zementen und stark aluminiumoxidhaltigen Zementen, Attapulgit, Bentonit, Halloysit, Hectorit, Kaolinit, Montmorillonit, Pyrophyllit, Sepiolit, Talk und Vermiculit und aus Gemischen hiervon.

10. Verfahren nach einem der Ansprüche 2 bis 9, wobei die Menge der verwendeten Bindemittel-Komponente, bezogen auf das Gesamtgewicht der Komponenten, 1 bis 20 Gew.-% beträgt.

11. Verfahren nach einem der Ansprüche 2 bis 10, wobei die Säure-Komponente ausgewählt ist aus Carbonsäuren, Salpetersäuren, Phosphorsäuren, Schwefelsäuren und aus Gemischen hiervon.

12. Verfahren nach einem der Ansprüche 2 bis 11, wobei die Menge der Säure in der Säure-Komponente, bezogen auf das Gesamtvolumen der Säure-Komponente, 0,1 bis 10 Vol.-% beträgt.

## Revendications

1. Un procédé comprenant les étapes consistant à :
(a) mettre en contact :
(1) un composé de zinc,
(2) un composé d'alumine, et
(3) un composé dispersant,
pour former un mélange ; et ensuite
(b) sécher par pulvérisation ledit mélange pour former des particules.

2. Le procédé selon la revendication 1, comprenant les étapes consistant à :
(a) mettre en contact :
(1) le composé de zinc,
(2) le composé d'alumine, et
(3) le composé dispersant, avec, en outre, un composé liant et/ou un composé acide pour former le mélange.

3. Le procédé selon la revendication 1 ou 2, dans lequel ledit composé de zinc est choisi parmi le sulfure de zinc, le sulfate de zinc, l'hydroxyde de zinc, le carbonate de zinc, l'acétate de zinc, le nitrate de zinc, le chlorure de zinc, le bromure de zinc, l'iodure de zinc, l'oxychlorure de zinc, le stéarate de zinc et leurs mélanges.

4. Le procédé selon l'une quelconque des revendications 1 à 3, dans lequel la quantité du composé de zinc utilisée se situe dans la gamme de 15 à 60 pourcent en poids, calculé sur le poids total des composés.

5. Le procédé selon l'une quelconque des revendications précédentes, dans lequel ledit composé d'alumine comprend de l'alumine.

6. Le procédé selon l'une quelconque des revendications précédentes, dans lequel la quantité du composé d'alumine utilisée se situe dans la gamme de 30 à 75 pourcent en poids, calculé sur le poids total des composés.

7. Le procédé selon l'une quelconque des revendications précédentes, dans lequel ledit composé dispersant est choisi parmi les phosphates condensés, les polymères sulfonés et leurs mélanges.

8. Le procédé selon l'une quelconque des revendications précédentes, dans lequel la quantité du composé dispersant utilisée se situe dans la gamme de 0,1 à 8 pourcent en poids, calculé sur le poids total des composés.

9. Le procédé selon l'une quelconque des revendications 2 à 8, dans lequel ledit composé liant est choisi parmi le plâtre de gypse, la chaux commune, la chaux hydraulique, les ciments naturels, les ciments de Portland, les ciments à alumine élevée, l'attapulgite, la bentonite, l'halloysite, l'hectorite, la kaolinite, la montmorillonite, la pyrophylite, la sépiolite, le talc, la vermiculite, et leurs mélanges.

10. Le procédé selon l'une quelconque des revendications 2 à 9, dans lequel la quantité du composé liant utilisée se situe dans la gamme de 1 à 20 pourcent en poids, calculé sur le poids total des composés.

11. Le procédé selon l'une quelconque des revendications 2 à 10, dans lequel ledit composé acide est choisi parmi les acides carboxyliques, l'acide nitrique, l'acide phosphorique, l'acide sulfurique, et leurs mélanges.

12. Le procédé selon l'une quelconque des revendications 2 à 11, dans lequel la quantité d'acide dans le composé acide se situe dans la gamme de 0,1 à 10 pourcent en volume, calculé sur le volume total du composé acide.
